# EUROPÄISCHE PATENTSCHRIFT

(11) **EP 2 882 565 B1**
(45) Veröffentlichungstag und Bekanntmachung des Hinweises auf die Patenterteilung: **22.03.2017**
(21) Anmeldenummer: 13728166.3
(22) Anmeldetag: 07.06.2013
(51) Int. Cl.: B23K 26/28, B21C 37/12, B23K 26/38, F16L 11/16, F16L 11/24

(54) **VERFAHREN UND VORRICHTUNG ZUM TRENNEN VON WICKELSCHLÄUCHEN MIT VERSCHWEISSTEN TEILEN**
METHOD AND DEVICE FOR SEPARATING WOUND TUBES HAVING WELDED PARTS
PROCÉDÉ ET DISPOSITIF POUR SÉPARER DES TUBES ENVELOPPANTS AYANT DES PARTIES SOUDÉES

(30) Priorität: 08.08.2012 DE 102012214044
(43) Veröffentlichungstag der Anmeldung: 17.06.2015
(73) Patentinhaber: Witzenmann GmbH, 75175 Pforzheim (DE)
(72) Erfinder: KAPPENSTEIN, Torsten, 75331 Engelsbrand (DE); KOLBE, Gerald, 75180 Pforzheim (DE); SCHNELL, Stefan, 70597 Stuttgart (DE)
(74) Vertreter: Lemcke, Brommer & Partner Patentanwälte Partnerschaft mbB
(86) Internationale Anmeldenummer: PCT/EP2013/061821
(87) Internationale Veröffentlichungsnummer: WO 2014/023452

(56) Entgegenhaltungen:
- EP-A1- 1 703 187
- EP-A1- 2 062 689
- DE-C1- 19 851 173
- DE-U1-202006 003 138
- US-B1- 6 508 277

## Beschreibung

Die Erfindung betrifft ein Verfahren und eine Vorrichtung zum Trennen bzw. Ablängen von Wickelschläuchen und einen Wickelschlauch gemäß dem Oberbegriff der Ansprüche 1, 13 und 12 (siehe, z.B. DE198 51 173 C1).

Als Wickelschläuche werden Metallschläuche bezeichnet, die durch Windungen aus einem Metallband gebildet werden, welche Windungen relativ lose formschlüssig miteinander verbunden sind. Typische Formen der Verbindung sind gehakte Profile (sogenannter LIH-Liner) und gefalzte Profile (Agraff-Profil, sogenannter LIS-Liner).

Wickelschläuche mit gehaktem Profil zeichnen sich durch eine besonders hohe Flexibilität aus. Wickelschläuche mit gefalztem Profil sind insgesamt relativ steif. Aufgrund der hohen Flexibilität sind speziell Wickelschläuche mit gehaktem Profil schlecht schweißbar, da sich keine definierte Schweißgeometrie ergibt.

Eine besonders bevorzugte Verwendungsmöglichkeit der genannten Wickelschläuche ist die Gasführung im Abgasbereich bei PKW und Nutzfahrzeugen. Weitere Verwendungsmöglichkeiten sind z. B. Schutzschläuche für Glasfasern, Telefonleitungen, Messgeräte-Leitungen oder Alarmanlagen.

Bei Wickelschläuchen besteht ein besonderes Problem darin, dass diese sich nach dem Ablängen aufwickeln können. Sie sind dann nur noch unter erhöhtem Aufwand oder gar nicht mehr montierbar, was in der Produktion unerwünscht ist.

Nach dem Stand der Technik werden die genannten Wickelschläuche durchgesägt, z. B. mittels einer Schmelztrennsäge, und anschließend wird das lose Ende mittels eines manuell gesetzten Schweißpunktes fixiert. Dies ist aufwändig und entsprechend teuer und daher für eine Serienproduktion weniger gut geeignet. Hierzu kommt, dass insbesondere bei einer Anwendung von Wickelschläuchen in Abgasanlagen keine Partikel erwünscht sind, wie sie beim Durchsägen eines Wickelschlauches jedoch entstehen können. Solche Partikel oder Späne können Filter oder andere nachgelagerte Bauteile, insbesondere Bauteile zur Abgasreinigung, zerstören. Darum wird vermehrt auch ein Lasertrennverfahren eingesetzt.

Hierzu kommen drei axial versetzte, umfänglich um den Schlauch herumgeführte Laserstrahlen zum Einsatz. Ein erster und ein zweiter Strahl setzen jeweils eine umlaufende Naht zum Fixieren des Wickelschlauchmaterials, wobei die beiden Nähte axial versetzt angeordnet sind.

Anschließend wird mittels eines dritten Laserstrahls zwischen den beiden Nähten der Wickelschlauch getrennt. Hierbei hat sich als nachteilig erwiesen, dass die beiden Nähte bei Wickelschläuchen relativ undefiniert ausgebildet werden, da ein Wickelschlauch aufgrund seiner grundsätzlichen Ausgestaltung -- wie oben beschrieben -- nur relativ wenig Material und relativ viel dazwischen befindlichen Freiraum aufweist. Es besteht die Gefahr, dass beim Versuch des Ausbildens einer Laserschweißnaht der Wickelschlauch dort eher getrennt als fixiert wird.

Außerdem ergeben sich bei dem genannten Verfahren relativ große Toleranzen aufgrund der inhärenten Beweglichkeit des Wickelschlauchs. Dies hat in der Vergangenheit dazu geführt, dass beim eigentlichen Trennvorgang mittels des dritten Laserstrahls auch die zuvor erzeugten Nähte selbst beschädigt wurden. Es kommt dann wiederum zu einem Aufwickeln des Wickelschlauchs, so dass eine Montage zumindest erschwert wird.

Aus der DE 198 51 173 C1 ist ein Verfahren zum Herstellen von Anschlussenden an Metallschlauchstücken, die von einem Endlosschlauch abgetrennt werden, bekannt, wobei vor dem Trennen überlappende Metalllagen durch Laserschweißen fixiert werden. Dazu wird ein Laserstrahl unter Überlagerung einer zyklischen, einen endlichen Winkel zur Umfangsrichtung des Schlauchstücks einschließenden Bewegung kontinuierlich über den gesamten Umfang des Schlauchstücks zur Herstellung der Schweißnaht geführt, wobei eine sinusförmige bzw. eine zick-zack- oder dreiecksförmige Schweißnaht erzeugt wird. Das Trennen kann anschließend mittels Laserstrahlschneiden erfolgen.

EP 1 703 187 A1 offenbart eine Vorrichtung zum axialen Ausrichten miteinander zu verbindender Rohrleitungsteile.

Aus der DE 20 2006 003 138 U1 ist eine Schweißanlage zum Verschweißen von Kunststoffrohrlängen bekannt, welche Schweißanlage zum Einspannen, Ausrichten, passgenauen Halten und Aufeinanderpressen von zwei Kunststoffrohrenden zweier Kunststoffrohrlängen in axialer Richtung vorgesehen ist.

EP 2 062 689 A1 offenbart eine Rohrverbindungsvorrichtung zur Kopplung/Entkopplung von insbesondere Hochdruckrohren zur Fluidführung, mit wenigstens zwei zueinander bewegbaren Klemmwerkzeugen, die jeweils mit zwei Klemmbolzen ausgerüstet sind, welche einen Rohrabschnitt unter Keilwirkung zwischen sich aufnehmen.

Aufgabe der vorliegenden Erfindung ist es, ein Verfahren und eine Vorrichtung zum Trennen von Wickelschläuchen bereitzustellen, welche einen sauberen und zuverlässigen Schnitt von Wickelschläuchen ermöglichen, wobei die Präzision des Ablängens gegenüber vorbekannten Verfahren erhöht sein soll.

Die Aufgabe der Erfindung wird durch Verfahren gemäß Anspruch 1, eine Vorrichtung gemäß Anspruch 13 und einen Wickelschlauch gemäß Anspruch 12 gelöst. Vorteilhafte Weiterbildungen der Erfindung sind in den abhängigen Ansprüchen definiert.

Erfindungsgemäß bereitgestellt wird also ein Verfahren zum Trennen eines Wickelschlauches, der ineinandergreifende Windungen eines Metallbands umfasst, wobei der Wickelschlauch in einem vorbestimmten axialen Bereich verschweißt wird und sodann innerhalb des vorbestimmten Bereichs in einer radialen Ebene durchtrennt wird, wobei der Wickelschlauch vor dem Verschweißen in dem vorbestimmten Bereich axial zusammengedrückt wird, so dass es zum Anliegen der Windungen aneinander in dem Bereich kommt, wodurch eine spiralförmig umlaufende Fuge in ihrer Breite konstant minimal wird, wobei dann das Verschweißen entlang einer vorbestimmten Anzahl von Windungen spiralförmig entlang der Fuge in dem Bereich vorgenommen wird.

Indem der Wickelschlauch in dem Bereich, wo er getrennt werden soll, vor dem Trennen zunächst zusammengedrückt und dann entlang der Windungen verschweißt wird, entstehen beim Trennen saubere Schnittflächen, und ein Aufwickeln des Schlauchs wird sicher verhindert. Weil das Verschweißen entlang der Windungen (vorzugsweise entlang einer Fuge oder Kehle zwischen den Windungen) - und nicht etwa senkrecht zur Achse des Wickelschlauches - erfolgt, hat die Fuge oder Kehle dort eine konstant kleine Breite, was die Präzision des Ablängens erhöht.

Vorteilhafterweise ist die vorbestimmte Anzahl größer oder gleich 2, bevorzugt ist die vorbestimmte Anzahl genau gleich 2.

Das Verschweißen erfolgt vorteilhafterweise als Heften mittels einzelner beabstandeter Schweißpunkte oder als durchgängige Schweißnaht in oder neben der durch die Windungen gebildeten Fuge oder Kehle.

Weiter vorteilhafterweise wird das Verschweißen unter Verwendung eines Laserstrahls durchgeführt.

Weiter vorteilhaft ist es, wenn auch das Trennen unter Verwendung eines (zweiten) Laserstrahls durchgeführt wird. Alternativ kann jedoch in allen Fällen - auch im Folgenden - auch eine mechanische Trennvorrichtung anstelle eines zweiten Laserstrahls eingesetzt werden, ohne den Rahmen der Erfindung zu verlassen.

Der Wickelschlauch kann relativ zu dem ersten Laserstrahl und/oder zu dem zweiten Laserstrahl bewegt werden.

Es können jedoch auch der erste Laserstrahl und/oder der zweite Laserstrahl relativ zum Wickelschlauch bewegt werden.

Vorteilhaft ist es, wenn der erste Laserstrahl und/oder der zweite Laserstrahl und/oder der Wickelschlauch automatisch, insbesondere unter Verwendung einer Kamera oder einer anderen optischen Einrichtung, relativ zueinander positioniert werden.

Weiter vorteilhaft ist es, wenn der erste Laserstrahl und/oder der zweite Laserstrahl unter Verwendung von geometrischen Informationen über das Windungsprofil des Wickelschlauches, wie dessen Steigung oder dgl., den zu verschweißenden Windungen automatisch nachgeführt werden.

Hierbei kann die genannte Information unter Verwendung einer Kamera oder einer anderen optischen Einrichtung und/oder eines Berührungssensors und/oder aus bekannten Spezifikationsdaten des Wickelschlauches ermittelt werden.

Der Wickelschlauch kann an zwei Rändern des Bereichs eingespannt werden, um ihn zusammenzudrücken.

Die Erfindung betrifft auch eine Vorrichtung zum Trennen eines Wickelschlauches, der ineinandergreifende Windungen eines Metallbands umfasst, aufweisend: erste Mittel, die ausgestaltet sind zum Verschweißen des Wickelschlauches in einem vorbestimmten axialen Bereich spiralförmig entlang einer vorbestimmten Anzahl von Windungen, und zweite Mittel, die ausgestaltet sind zum Trennen des Wickelschlauches innerhalb des vorbestimmten Bereichs in einer radialen Ebene, wobei weiterhin dritte Mittel vorgesehen sind, die ausgestaltet sind zum axialen Zusammendrücken des Wickelschlauches in dem vorbestimmten Bereich, so dass es dort zu einem Anliegen der einzelnen Windungen aneinander kommt, wodurch eine spiralförmig umlaufende Fuge in ihrer Breite konstant minimal wird, und wobei weitere Mittel vorgesehen sind, die ausgestaltet sind zum Nachführen der ersten Mittel relativ zu dem Wickelschlauch.

Vorteilhaft ist es, wenn die ersten und zweiten Mittel Laservorrichtungen umfassen.

Die weiteren Mittel können insbesondere ausgestaltet sein zum Nachführen der ersten Mittel entlang den zu verschweißenden Windungen unter Verwendung von Information über das Windungsprofil des Wickelschlauches.

Zum Ermitteln von geometrischen Informationen betreffend den Wickelschlauch können eine Kamera oder dgl. und/oder ein Berührungssensor und/oder weitere Mittel vorgesehen sein, wobei Letztere als zum Zugreifen auf einen elektronischen Datenbestand ausgestaltete Mittel ausgebildet sein können, um bekannten Spezifikationsdaten des Wickelschlauchs zu ermitteln.

Weiter vorteilhaft ist es, wenn noch vierte Mittel vorgesehen sind, die ausgestaltet sind zum Bewegen des Wickelschlauches relativ zu den ersten und/oder zweiten Mitteln.

Die vierten Mittel können aber auch ausgestaltet sein zum Bewegen der ersten und/oder zweiten Mittel relativ zum Wickelschlauch.

Weiter vorteilhafterweise können noch weitere Mittel vorgesehen sein zum Einspannen des Wickelschlauches an zwei Enden, um ihn zusammenzudrücken.

Die Erfindung ist also mit dem Vorteil verbunden, dass am Endprodukt in einfacher, automatisierbarer Weise eine rechtwinklige endständige Schnittfläche im Sinne eines qualitativ hochwertigen Schnitts erzielt wird, ohne dass die Gefahr eines Aufwickelns des Schlauchs besteht. Aufgrund der möglichen Automatisierung lassen sich durch Einsatz der vorliegenden Erfindung hohe Stückzahlen mit entsprechend geringen Taktzeiten und Kosten realisieren.

Grundsätzlich eignen sich zum Trennen lasergestützte Trennverfahren und auch mechanische Verfahren (z.B. Sägen). Trennen mittels Laserstrahlen hat den Vorzug, dass hierbei keine Partikelrückstände entstehen und die Schnittfläche über ihre gesamte Länge sauber ist.

Weitere Merkmale und Vorteile der vorliegenden Erfindung ergeben sich aus der nachfolgenden Beschreibung von Ausführungsbeispielen anhand der Zeichnung; hierbei zeigt:
- Fig. 1: die Anwendung des erfindungsgemäßen Verfahrens am Beispiel eines Wickelschlauches mit einem gehakten Profil (LIH-Liner) ; und
- Fig. 2: die Anwendung des erfindungsgemäßen Verfahrens am Beispiel eines Wickelschlauches mit einem gefalzten Profil (Agraff-Profil, sog. LIS-Liner).

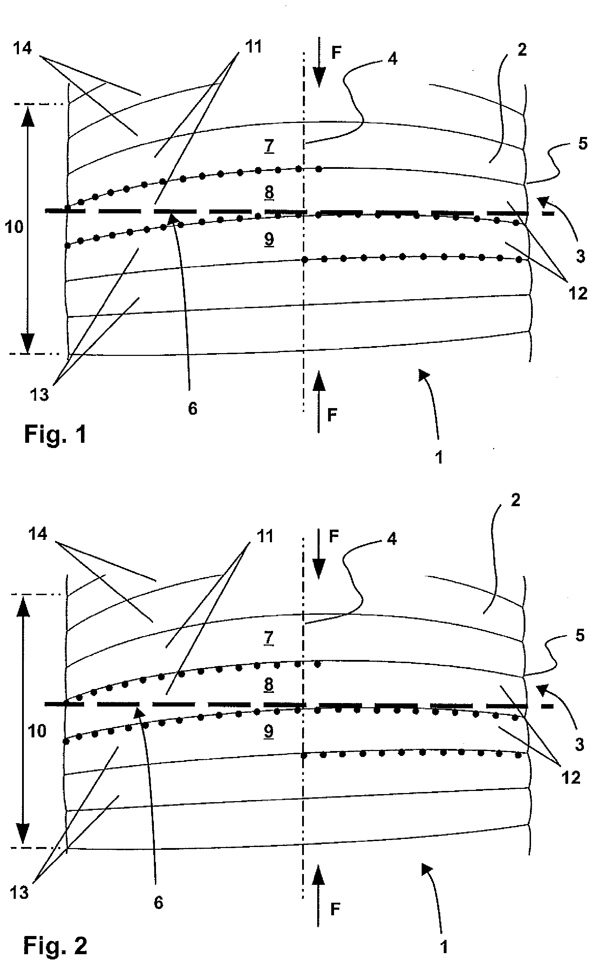

Fig. 1 zeigt die Anwendung des erfindungsgemäßen Verfahrens am Beispiel eines Wickelschlauches 1, dessen Mantelfläche 3 durch ein spiralförmig gewundenes Metallband 2 gebildet wird. Als eine Windung wird im Folgenden ein einmaliger vollständiger Umlauf des Metallbandes 2 um die Achse 4 des Wickelschlauches 1 bezeichnet. In der Figur 1 sind Windungen 11, 12, 13, 14, 15 bezeichnet. Dabei beginnt die erste Windung 11 (gedanklich) an der Stelle 7 und endet an der Stelle 8. Die zweite Windung 12 beginnt an der Stelle 8 und endet an der Stelle 9 usw. Das Metallband 2 bzw. die Windungen definieren eine Fuge 5 (vorliegend auch als kehle bezeichnet), die ebenfalls spiralförmig auf bzw. in der Mantelfläche 3 verläuft. Die Verbindung des Metallbandes 2 an seinen Rändern ist durch lockeres Verhaken der benachbarten Windungen miteinander realisiert (sog. LIH-Liner). Weil die Verbindung relativ lose ist, ist die Fuge 5 über die Mantelfläche 2 in ihrer Breite variabel.

Zum Trennen des Wickelschlauches 1 auf eine gewünschte Länge wird erfindungsgemäß der Wickelschlauch 1 beiderseits der axialen Stelle 6, an welcher die Trennung erfolgen soll, eingespannt. Sodann wird der axiale Bereich 10 zwischen den Stellen, an denen der Wickelschlauch 1 eingespannt ist, durch Beaufschlagen mit einer axial wirkenden Kraft F "auf Block" axial zusammengedrückt, so dass es in diesem Bereich 10 zu einem definierten Anliegen der einzelnen Windungen 11, 12, 13, 14 aneinander kommt, wodurch die spiralförmig umlaufende Fuge 5 in ihrer Breite konstant minimal wird und anschließend gut verschweißt werden kann.

Zum Verschweißen wird ein Schweißlaser geeignet positioniert, und zwar manuell oder vorzugsweise automatisch, beispielsweise unter Verwendung einer Kamera oder dgl. Dann wird analog zu einer Gewindesteigung die spiralförmige Fuge 5 in dem zusammengedrückten Bereich 10 des Wickelschlauches 1 mittels des Lasers abgefahren und dabei verschweißt (geheftet). Hierbei erfolgt eine Relativbewegung zwischen Wickelschlauch und Laser. Es kann also entweder der Schlauch im Verhältnis zum ruhenden Laser bewegt werden, oder der Laser wird im Verhältnis zum ruhenden Wickelschlauch bewegt. Natürlich könnten ebenso sowohl der Laser als auch der Wickelschlauch 1 bewegt werden.

Da die Schlauchgeometrie bekannt ist, kann für die Relativbewegung von Wickelschlauch und Laser ein theoretischer Steigungswinkel angenommen und steuerungstechnisch berücksichtigt werden. Die Daten des Wickelschlauches 1 können jeweils aus einem elektronisch gespeicherten Datenbestand entnommen werden. Auch ist es möglich, den Verlauf der Fuge 5 mittels einer Kamera oder dgl. optisch oder mittels taktiler Sensoren zu erfassen, um sicherzustellen, dass die Verschweißung genau in der Fuge ("in der Kehle"), wie in Fig. 1 gezeigt ist, erfolgt.

Es hat sich als besonders vorteilhaft und ausreichend erwiesen, die Fuge 5 entlang zweier Windungen 11, 12 zu verschweißen und den Wickelschlauch 1 in der Mitte 6 der beiden Windungen 11, 12 (bezogen auf die axiale Richtung) zu trennen. Dann entsteht ein hinreichend langer Bereich 10 mit genau definierter und gleichmäßiger Fuge 5, und es wird eine saubere anschließende Trennung ohne abstehende Enden ermöglicht. Beiderseits der Trennlinie verbleiben sicher fixierte Schlauchenden, die sich nicht aufwickeln.

Das Verschweißen der beiden Windungen 11, 12 wird vorteilhafterweise mittels zweier axial zueinander versetzter Laserstrahlen vorgenommen, so dass jeder Laserstrahl nur auf der Länge einer Windung 11 bzw. 12 fährt und schweißt, was die Bearbeitung beschleunigt.

Aufgrund des erfolgten Zusammendrückens des Wickelschlauchs 1 kommt es in der Fuge 5 im Bereich 10 dazu, dass relativ viel Material für die Verschweißung zur Verfügung steht. Dies betrifft insbesondere das gehakte Profil; das gefalzte Profil (Agraffprofil) lässt sich geometrisch bedingt nicht vollständig zusammenschieben. Der genannte Effekt kommt jedoch auch hier zum Tragen.

Schließlich wird der Wickelschlauch 1 an der vorbestimmten Stelle in der durch die Mitte 6 verlaufende radiale Ebene (also senkrecht zur Mantelfläche 3 und auch senkrecht zur Achse 4 des Wickelschlauches 1) durchtrennt. Die Durchtrennung erfolgt vorteilhafterweise mittels Lasers. Vorteilhafterweise wird hierzu ein zweiter Laserstrahl verendet. Es liegt jedoch im Bereich der Erfindung, ein und denselben Laser bzw. Laserstrahl (bei entsprechender Einstellung der Leistung) zunächst zum Verschweißen der Windungen und anschließend zum Trennen des Schlauchs einzusetzen.

Was die Art der Schweißnaht anbelangt, so kann diese als punktförmige Heftung - wie bereits erwähnt - oder auch als durchgehende Schweißnaht ausgebildet werden.

Fig. 2 zeigt die Anwendung des erfindungsgemäßen Verfahrens am Beispiel eines Wickelschlauches 1 mit einem gefalzten Profil (Agraff-Profil, sog. LIS-Liner). Das Verfahren gleicht demjenigen, wie es in Verbindung mit Fig. 1 beschrieben ist, mit dem Unterschied, dass hier die Schweißvariante "neben der Kehle" angewendet wurde.

Die erfindungsgemäße Vorrichtung zum Trennen eines Wickelschlauches nach dem hier beschriebenen Verfahren ist wie folgt ausgestaltet. Es sind Mittel zum Verschweißen des Wickelschlauches in einem vorbestimmten axialen Bereich entlang einer vorbestimmten Anzahl von Windungen vorhanden. Diese Mittel umfassen vorzugsweise zwei Laser. Diese Laser sind axial (mit Bezug auf den zu trennenden Wickelschlauch) gegeneinander versetzt, und zwar um den Gangunterscheid einer Windung des zu trennenden Wickelschlauches 1. Es liegt jedoch im Rahmen der Erfindung, nur einem Laser einzusetzen, welcher dann nacheinander vorzugsweise zwei Windungen des Wickelschlauchs 1 miteinander verschweißt, nachdem diese auf Block zusammengedrückt wurden.

Ferner sind Mittel zum Trennen des Wickelschlauches innerhalb des vorbestimmten Bereichs in einer radialen Ebene vorhanden. Diese Mittel umfassen eine weitere Laservorrichtung, bei der es sich um dieselbe Laservorrichtung handeln kann, die zum Verschweißen der Windungen verwendet wurde. Zum axialen Zusammendrücken des Wickelschlauch in dem genannten Bereich sind Einspannmittel vorgesehen, die an dem Wickelschlauch angreifen und diesen auf Block zusammendrücken, derart dass es zum Anliegen der einzelnen Windungen aneinander in dem Bereich kommt.

Es sind des Weiteren Mittel zum Bewegen des Wickelschlauches relativ zu den Verschweißmitteln vorgesehen. Alternativ können diese Mittel auch so ausgestaltet ein, dass sie die Verschweißmittel relativ zum Wickelschlauch bewegen.

Wieder andere Mittel sind vorgesehen, die ausgestaltet sind zum Positionieren der Verschweißmittel relativ zu dem Wickelschlauch. Diese Mittel dienen dazu, die Anfangsposition auf dem Wickelschlauch zu finden, von der ab das Verschweißen der Fuge durchgeführt wird. Diese Mittel können eine oder mehrere Kameras oder dgl. umfassen, welche Bilder des Wickelschlauches an eine Auswerte- und Steuereinheit liefern welche die Funktion der gesamten Vorrichtung steuert und überwacht.

Die Kameras können das Nachführen der Verschweißmittel entlang der zu verschweißenden Fuge unterstützen. Aus den Kamerabildern wird dann Information über den Verlauf der Fuge auf dem Umfang des Wickelschlauches ermittelt. Gegebenenfalls kann auch eine Information über die Art der Verbindung, also das Windungsprofil, ermittelt werden.

Alternativ oder zusätzlich können auch taktile Sensoren vorgesehen sein, mittels denen der Verlauf der Fuge abgetastet wird. Auch diese Sensoren können die ermittelten Daten an die Auswerte- und Steuereinheit liefern.

Ebenfalls alternativ oder zusätzlich können die Informationen über Art und Verlauf der Fuge durch Zugriff auf einen elektronisch gespeicherten Datenbestand entnommen werden, in welchem die Spezifikationen des zu trennenden Wickelschlauches enthalten sind. Dieser Datenbestand kann die Form einer Datenbank aufweisen, beispielsweise bereitgestellt durch den Hersteller des Wickelschlauches, auf welche die Auswerte- und Steuereinheit zugreift. Dann kann die Ansteuerung der Verschweißmittel rein rechnerisch erfolgen, also ohne optische oder mechanische Abtastung des tatsächlich zu trennenden Wickelschlauches. Die gesamte Vorrichtung funktioniert so, wie weiter oben in Verbindung mit Fig. 1 und Fig. 2 beschrieben ist.

## Patentansprüche

1. Verfahren zum Trennen eines Wickelschlauches (1), der ineinandergreifende Windungen (11, 12, 13, 14) eines Metallbands (2) umfasst, wobei der Wickelschlauch (1) in einem vorbestimmten axialen Bereich (10) verschweißt wird und sodann innerhalb des Bereichs (10) in einer radialen Ebene (6) durchtrennt wird,
**dadurch gekennzeichnet, dass**
der Wickelschlauch (1) vor dem Verschweißen in dem vorbestimmten Bereich axial zusammengedrückt wird, so dass es in dem Bereich (10) zu einem Anliegen der Windungen (11, 12, 13, 14) aneinander kommt, wodurch eine spiralförmig umlaufende Fuge (5) in ihrer Breite konstant minimal wird, und das Verschweißen entlang einer vorbestimmten Anzahl von Windungen (11, 12) spiralförmig entlang der Fuge (5) in dem Bereich (10) vorgenommen wird.

2. Verfahren gemäß Anspruch 1,
**dadurch gekennzeichnet, dass**
die vorbestimmte Anzahl größer oder gleich 2, bevorzugt etwa gleich 2 ist.

3. Verfahren gemäß Anspruch 1 oder 2,
**dadurch gekennzeichnet, dass**
das Verschweißen als Heftung oder als durchgängige Schweißnaht in oder neben einer im Bereich der Windungen (11, 12, 13, 14) gebildeten Fuge oder Kehle (5) erfolgt.

4. Verfahren gemäß einem der Ansprüche 1 bis 3,
**dadurch gekennzeichnet, dass**
das Verschweißen unter Verwendung eines ersten Laserstrahls durchgeführt wird.

5. Verfahren gemäß einem der Ansprüche 1 bis 4,
**dadurch gekennzeichnet, dass**
das Trennen unter Verwendung eines zweiten Laserstrahls oder mittels einer mechanischen Trennvorrichtung durchgeführt wird.

6. Verfahren gemäß Anspruch 5,
**dadurch gekennzeichnet, dass**
der Wickelschlauch (1) relativ zu dem ersten Laserstrahl und/oder zu dem zweiten Laserstrahl bewegt wird.

7. Verfahren gemäß Anspruch 5,
**dadurch gekennzeichnet, dass**
der erste Laserstrahl und/oder der zweite Laserstrahl relativ zum Wickelschlauch (1) bewegt wird.

8. Verfahren gemäß einem der Ansprüche 4 bis 7,
**dadurch gekennzeichnet, dass**
der erste Laserstrahl und/oder der zweite Laserstrahl und/oder der Wickelschlauch (1) automatisch, insbesondere unter Verwendung einer optischen Einrichtung, vorzugsweise Kamera, relativ zueinander positioniert werden.

9. Verfahren gemäß einem der Ansprüche 4 bis 8,
**dadurch gekennzeichnet, dass**
der erste Laserstrahl und/oder der zweite Laserstrahl unter Verwendung von geometrischen Informationen über das Windungsprofil des Wickelschlauches (1) den zu verschweißenden Windungen (11, 12) automatisch nachgeführt wird.

10. Verfahren gemäß Anspruch 9,
**dadurch gekennzeichnet, dass**
die geometrischen Informationen unter Verwendung einer Kamera und/oder eines Berührungssensors und/oder aus Spezifikationsdaten des Wickelschlauches (1) ermittelt werden.

11. Verfahren gemäß einem der Ansprüche 1 bis 10,
**dadurch gekennzeichnet, dass**
der Wickelschlauch an zwei Rändern des Bereichs (10) eingespannt wird, um ihn zusammenzudrücken.

12. Wickelschlauch (1), umfassend ineinandergreifende Windung (11, 12, 13, 14) eines Metallbands (2), wobei der Wickelschlauch (1) einen Trennungsbereich (10) in einer radialen Ebene (6) aufweist, in dem der Wickelschlauch (1) verschweißt ist, **dadurch gekennzeichnet, dass** in diesem Trennungsbereich (10) ein Verschweißen entlang einer vorbestimmten Anzahl von Windungen (11, 12) spiralförmig entlang einer Fuge (5) stattfindet, wobei der Wickelschlauch (1) nach dem Verfahren gemäß einem der Ansprüche 1 bis 11 hergestellt ist.

13. Vorrichtung zum Trennen eines Wickelschlauches (1), der ineinandergreifende Windungen (11, 12, 13, 14) eines Metallbands (2) umfasst, aufweisend:
erste Mittel, insbesondere Laser, ausgestaltet zum Verschweißen des Wickelschlauches (1) in einem vorbestimmten axialen Bereich (10) spiralförmig entlang einer vorbestimmten Anzahl von Windungen (11, 12), und
zweite Mittel, insbesondere Laser oder mechanische Trennvorrichtung, ausgestaltet zum Trennen des Wickelschlauches (1) innerhalb des Bereichs (10) in einer radialen Ebene (6),
**gekennzeichnet durch**
dritte Mittel, die ausgestaltet sind zum axialen Zusammendrücken des Wickelschlauches (1) in dem Bereich (10), sodass es in dem Bereich (10) zu einem Anliegen der Windungen (11, 12, 13, 14) aneinander kommt, wodurch eine spiralförmig umlaufende Fuge (5) in ihrer Breite konstant minimal wird, und
weitere Mittel, die ausgestaltet sind zum Nachführen der ersten Mittel relativ zu dem Wickelschlauch (1).

14. Vorrichtung gemäß Anspruch 13,
**gekennzeichnet durch**
vierte Mittel, die ausgestaltet sind zum Bewegen von Wickelschlauch (1) und den ersten Mitteln relativ zueinander.

## Claims

1. Method of separating a stripwound hose (1) which comprises interlocking windings (11, 12, 13, 14) of a metal strip (2), wherein the stripwound hose (1) is welded in a predetermined axial region (10) and is then severed in a radial plane (6) within the region (10),
**characterised in that**
prior to the welding the stripwound hose (1) is compressed axially in the predetermined region, so that in the region (10) the windings (11, 12, 13, 14) come to rest one against another, with the result that a joint (5) running helically around the circumference becomes a constant minimum width, and the welding is carried out along a predetermined number of windings (11, 12) helically along the joint (5) in the region (10).

2. Method according to claim 1,
**characterised in that**
the predetermined number is greater than or equal to 2, preferably approximately equal to 2.

3. Method according to claim 1 or 2,
**characterised in that**
the welding is effected in the form of tack welding or in the form of a continuous welded seam in or next to a joint or groove (5) formed in the region of the windings (11, 12, 13, 14).

4. Method according to any one of claims 1 to 3,
**characterised in that**
the welding is carried out using a first laser beam.

5. Method according to any one of claims 1 to 4,
**characterised in that**
the separation is carried out using a second laser beam or by means of a mechanical separating device.

6. Method according to claim 5,
**characterised in that**
the stripwound hose (1) is moved relative to the first laser beam and/or to the second laser beam.

7. Method according to claim 5,
**characterised in that**
the first laser beam and/or the second laser beam is moved relative to the stripwound hose (1).

8. Method according to any one of claims 4 to 7,
**characterised in that**
the first laser beam and/or the second laser beam and/or the stripwound hose (1) are positioned relative to one another automatically, especially using an optical device, preferably a camera.

9. Method according to any one of claims 4 to 8,
**characterised in that**
the first laser beam and/or the second laser beam is guided automatically along the windings (11, 12) to be welded, using geometric information relating to the winding profile of the stripwound hose (1).

10. Method according to claim 9,
**characterised in that**
the geometric information is obtained using a camera and/or a contact sensor and/or from specification data of the stripwound hose (1).

11. Method according to any one of claims 1 to 10,
**characterised in that**
the stripwound hose is clamped at two edges of the region (10) in order to compress it.

12. Stripwound hose (1), comprising interlocking windings (11, 12, 13, 14) of a metal strip (2), wherein the stripwound hose (1) has a separation region (10) in a radial plane (6) in which the stripwound hose (1) has been welded, **characterised in that in that** separation region (10) welding is carried out along a predetermined number of windings (11, 12) helically along a joint (5), wherein the stripwound hose (1) has been produced by the method according to any one of claims 1 to 11.

13. Apparatus for separating a stripwound hose (1) which comprises interlocking windings (11, 12, 13, 14) of a metal strip (2), having:
first means, especially lasers, configured for welding the stripwound hose (1) in a predetermined axial region (10) helically along a predetermined number of windings (11, 12), and
second means, especially lasers or a mechanical separating device, configured for separating the stripwound hose (1) in a radial plane (6) within the region (10),
**characterised by**
third means, which are configured for axially compressing the stripwound hose (1) in the region (10), so that in the region (10) the windings (11, 12, 13, 14) come to rest one against another, with the result that a joint (5) running helically around the circumference becomes a constant minimum width, and
further means, which are configured for guiding the first means relative to the stripwound hose (1).

14. Apparatus according to claim 13,
**characterised by**
fourth means, which are configured for moving the stripwound hose (1) and the first means relative to one another.

## Revendications

1. Procédé de séparation d'un tuyau flexible enroulé (1) muni d'enroulements (11, 12, 13, 14) d'une bande métallique (2) s'interpénétrant, ledit tuyau flexible enroulé (1) étant soudé dans une région axiale prédéterminée (10), pour être ensuite séparé dans un plan radial (6) à l'intérieur de ladite région (10),
**caractérisé par le fait que**
le tuyau flexible enroulé (1) est comprimé axialement dans la région prédéterminée (10) préalablement au soudage, ce qui provoque, dans ladite région (10), une venue en applique des enroulements (11, 12, 13, 14) les uns contre les autres,
de sorte qu'une jointure (5), s'étendant hélicoïdalement à la périphérie, présente une largeur minimale constante et que le soudage est effectué suivant un tracé hélicoïdal longeant ladite jointure (5), dans ladite région (10), le long d'un nombre d'enroulements (11, 12) prédéterminé.

2. Procédé selon la revendication 1,
**caractérisé par le fait que**
le nombre prédéterminé est supérieur ou égal à 2, de préférence approximativement égal à 2.

3. Procédé selon la revendication 1 ou 2,
**caractérisé par le fait que**
le soudage est effectué sous la forme d'un agrafage ou d'un cordon de soudure continu, dans une jointure (5) ou une gorge ménagée dans la région des enroulements (11, 12, 13, 14), ou à côté de ladite jointure ou gorge.

4. Procédé selon l'une des revendications 1 à 3,
**caractérisé par le fait que**
le soudage est exécuté avec utilisation d'un premier rayon laser.

5. Procédé selon l'une des revendications 1 à 4,
**caractérisé par le fait que**
la séparation est exécutée avec utilisation d'un second rayon laser, ou au moyen d'un dispositif de séparation mécanique.

6. Procédé selon la revendication 5,
**caractérisé par le fait que**
le tuyau flexible enroulé (1) est mis en mouvement par rapport au premier rayon laser et/ou au second rayon laser.

7. Procédé selon la revendication 5,
**caractérisé par le fait que**
le premier rayon laser et/ou le second rayon laser est (sont) mis en mouvement par rapport au tuyau flexible enroulé (1).

8. Procédé selon l'une des revendications 4 à 7,
**caractérisé par le fait que**
le premier rayon laser et/ou le second rayon laser et/ou le tuyau flexible enroulé (1) est (sont) positionné(s) mutuellement en mode automatique, notamment avec utilisation d'un système optique, d'une caméra de préférence.

9. Procédé selon l'une des revendications 4 à 8,
**caractérisé par le fait que**
le premier rayon laser et/ou le second rayon laser est (sont) réajusté(s) automatiquement en fonction des enroulements (11, 12) à souder, avec utilisation d'informations géométriques relatives au profil de circonvolution du tuyau flexible enroulé (1).

10. Procédé selon la revendication 9,
**caractérisé par le fait que**
les informations géométriques sont établies par utilisation d'une caméra et/ou d'un détecteur de contact, et/ou sur la base de données de spécification du tuyau flexible enroulé (1).

11. Procédé selon l'une des revendications 1 à 10,
**caractérisé par le fait que**
le tuyau flexible enroulé est abloqué sur deux bords de la région (10), en vue de le comprimer.

12. Tuyau flexible enroulé (1) muni d'enroulements (11, 12, 13, 14) d'une bande métallique (2) s'interpénétrant, le tuyau flexible enroulé (1) comportant, dans un plan radial (6), une région de séparation (10) dans laquelle ledit tuyau flexible enroulé (1) est soudé,
**caractérisé par le fait**
**qu'**un soudage est effectué suivant un tracé hélicoïdal longeant une jointure (5) dans cette région de séparation (10), le long d'un nombre d'enroulements (11, 12) prédéterminé, ledit tuyau flexible enroulé (1) étant fabriqué suivant le procédé conforme à l'une des revendications 1 à 11.

13. Dispositif dévolu à la séparation d'un tuyau flexible enroulé (1) muni d'enroulements (11, 12, 13, 14) d'une bande métallique (2) s'interpénétrant, incluant :
des premiers moyens notamment de type laser, affectés au soudage dudit tuyau flexible enroulé (1), dans une région axiale prédéterminée (10), suivant un tracé hélicoïdal le long d'un nombre d'enroulements (11, 12) prédéterminé, et
des deuxièmes moyens notamment de type laser, ou un dispositif de séparation mécanique, affecté(s) à la séparation dudit tuyau flexible enroulé (1) dans un plan radial (6), à l'intérieur de ladite région (10),
**caractérisé par**
des troisièmes moyens affectés à la compression axiale du tuyau flexible enroulé (1) dans la région (10), ce qui provoque, dans ladite région (10), une venue en applique des enroulements (11, 12, 13, 14) les uns contre les autres,
de sorte qu'une jointure (5), s'étendant hélicoïdalement à la périphérie, présente une largeur minimale constante ; et par
des moyens supplémentaires affectés au réajustement des premiers moyens par rapport audit tuyau flexible enroulé (1).

14. Dispositif selon la revendication 13,
**caractérisé par**
des quatrièmes moyens conçus pour imprimer des mouvements relatifs au tuyau flexible enroulé (1), et aux premiers moyens.
